Europäisches Patentamt

European Patent Office

Office européen des brevets

(11) Numéro de publication: **0 260 632 B1**

# FASCICULE DE BREVET EUROPEEN

(45) Date de publication de fascicule du brevet: **29.04.92**  (51) Int. Cl.5: **H04L  7/02**

(21) Numéro de dépôt: **87113390.6**

(22) Date de dépôt: **14.09.87**

(54) **Dispositif de recalage d'un ou plusieurs trains de données binaires de débits identiques ou sous multiples sur un signal de référence d'horloge synchrone.**

(30) Priorité: **17.09.86 FR 8613019**

(43) Date de publication de la demande:
**23.03.88 Bulletin  88/12**

(45) Mention de la délivrance du brevet:
**29.04.92 Bulletin  92/18**

(84) Etats contractants désignés:
**DE FR GB IT NL SE**

(56) Documents cités:
**US-A- 4 415 984**
**US-A- 4 420 696**
**US-A- 4 464 769**

**PATENT ABSTRACTS OF JAPAN, vol. 5, no. 125 (E-69) [797], 12 aôut 1981; & JP-A-56 61 851**

**PATENT ABSTRACTS OF JAPAN, vol. 5, no. 149 (E-75) [821], 19 septembre 1981; & JP-A-56-80 944**

**IBM TECHNICAL DISCLOSURE BULLETIN, vol. 26, no. 3B, aôut 1983, pages 1535-1536, New York, US; J.C. FROMENT et al.: "Four-phase signal generator using a balanced input/output driver"**

(73) Titulaire: **ALCATEL CIT**
**12 Rue de la Baume**
**F-75008 Paris(FR)**

(72) Inventeur: **Ley, Bruno**
**"Bon Voyage" Plounerin**
**F-22780 Loguivy-Plougras(FR)**
Inventeur: **Jaouen, Jean-Yves**
**Rue de Kernéguez**
**Loguivy-les-Lannion(FR)**

(74) Mandataire: **Weinmiller, Jürgen et al**
**Lennéstrasse 9 Postfach 24**
**W-8133 Feldafing(DE)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

**Description**

La présente invention concerne le traitement des trains numériques formés d'une succession de données binaires occupant des intervalles de temps égaux et, plus particulièrement, le recalage d'un ou plusieurs trains de données binaires de débits identiques ou sous multiples, sur un signal d'horloge local synchrone, permettant la récupération, par échantillonnage, des valeurs exactes des données contenues dans le ou les trains numériques. Cette opération, nécessaire pour la bonne réception d'un train de données binaires, doit également être effectuée dans les dispositifs de traitement de données recevant des données binaires, à des débits identiques, par différentes voies, en provenance de sources distinctes sans relation de phase connue.

On connaît deux catégories de dispositifs de recalage d'un train de données par rapport à un signal d'horloge synchrone. Les dispositifs de la première catégorie, tels que ceux décrits dans la demande de brevet français FR-A-2 567 696, engendrent un ensemble de versions du train de données binaires avec différents retards équitablement répartis sur la durée d'une période du signal d'horloge, échantillonnent l'ensemble de ces versions par le signal d'horloge et sélectionnent la version la mieux cadrée par rapport au signal d'horloge comme étant celle dont l'échantillonnage donne les mêmes résultats que ceux des deux autres versions plus et moins retardées qui l'encadrent de plus près et éventuellement, d'autres versions plus et moins retardées l'encadrant de plus loin. Les dispositifs de la deuxième catégorie, tels que ceux décrits dans la demande de brevet français FR-A-2 567 697, engendrent une version de référence du train de données encadrée par deux autres versions plus et moins retardées par rapport au signal d'horloge, les trois versions restant dans une gamme de retard s'étendant sur une période du signal d'horloge, et décalent l'ensemble des trois versions relativement au signal d'horloge, de manière que les échantillonnages de ces trois versions par le signal d'horloge donnent des mêmes résultats, ce décalage s'effectuant de préférence en imposant un retard ajustable au train de données dont sont issues les trois versions retardées ce qui permet de cadrer au mieux la version de référence par rapport au signal d'horloge.

Ces deux catégories de dispositifs de recalage utilisent au minimum trois versions, différemment retardées entre elles, de chaque train de données à recaler, ce qui contribue à accroître rapidement la complexité des dispositifs avec le nombre de trains de données à traiter.

La demande de brevet japonais JP-A-5 661 851 décrit un dispositif de recalage d'un train de données binaires sur un signal d'horloge pour régénérer des informations sans erreur. Ce dispositif comporte :
- un générateur de signaux polyphasés d'horloge ;
- un circuit de sélection de l'un des signaux d'horloge délivrés par le générateur de signaux polyphasés d'horloge ;
- un circuit de balayage séquentiel de l'adressage du circuit de sélection provoquant, lorsqu'il progresse, l'échange du signal d'horloge sélectionné, par un autre déphasé d'une certaine valeur ;
- un circuit de double échantillonnage opérant deux échantillonnages successifs du train de données à recaler, décalés d'un petit délai ; l'un de ces échantillonnages étant réalisé à la cadence du signal d'horloge délivré par le circuit de sélection ;
- un comparateur comparant les deux valeurs de chaque double échantillonnage faisant progresser le circuit de balayage séquentiel en cas de discordance de valeurs.

Ce dispositif connu ne vise pas à synchroniser le train de données sur un signal d'horloge unique mais vise seulement à l'échantillonner dans de bonnes conditions.

Le brevet US-4 464 769 décrit un circuit de synchronisation d'un train binaire sur une horloge locale, qui comporte :
- une première bascule qui échantillonne le train binaire à synchroniser, cet échantillonnage étant effectué en synchronisme soit avec le signal d'horloge locale, soit avec la version complémentée de ce signal d'horloge locale, fournie par un circuit inverseur de phase, le choix se portant sur celui qui tend à éviter une coïncidence des fronts du train binaire et de l'horloge locale ;
- et une seconde bascule qui échantillonne le signal de sortie de la première bascule en synchronisme avec l'horloge locale.

Ce circuit de synchronisation connu a des performances limitées en fréquence de fonctionnement. En outre, le taux d'erreurs binaires est médiocre par le fait que ce dispositif ne dispose que de deux signaux d'horloge déphasés de 180°, pour constituer le premier signal d'échantillonnage.

La présente invention a pour but un dispositif de recalage d'un ou plusieurs trains de données qui diffère de ceux précités par une structure plus simple autorisant un fonctionnement à des débits binaires plus élevés.

EP 0 260 632 B1

Ce but est atteint selon l'invention par le dispositif tel que caractérisé dans la revendication 1. En ce qui concerne des modes préférés de réalisation de ce dispositif, référence est faite aux revendications dépendantes.

L'invention sera décrite ci-après plus en détail à l'aide d'un mode de réalisation donné à titre d'exemple et du dessin annexé, dans lequel:

- la figure 1 représente un schéma synoptique d'un dispositif selon l'invention destiné au recalage de deux trains binaires de mêmes débits sur un signal local d'horloge synchrone,
- la figure 2 détaille le schéma du générateur de signaux polyphasés d'horloge et de l'un des circuits de remise en phase représentés à la figure 1,
- et les figures 3 et 4 sont des diagrammes de courbes explicitant le fonctionnement d'un circuit de double échantillonnage représenté à la figure 2 et faisant partie de chaque circuit de remise en phase.

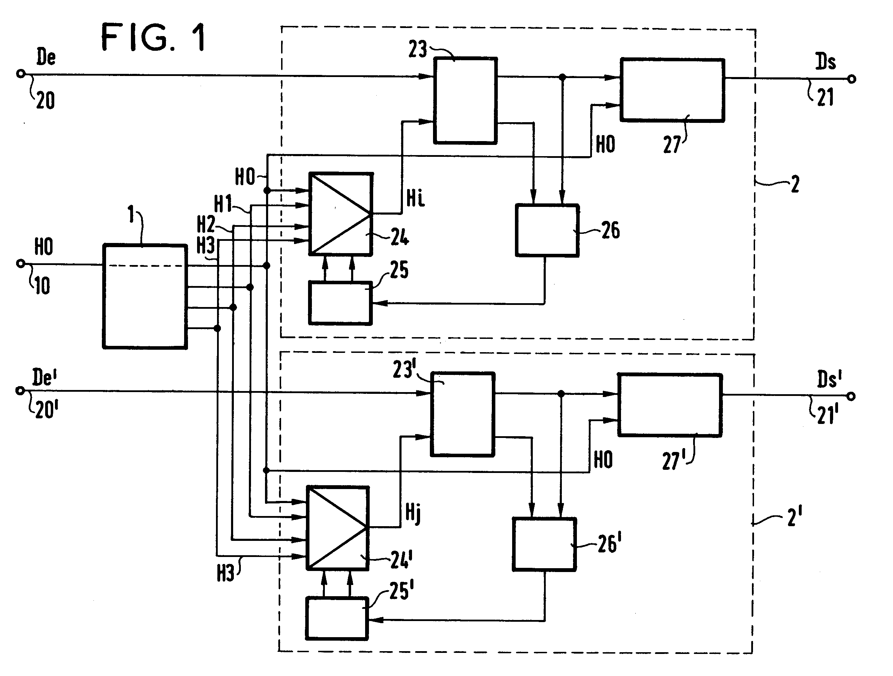

Le dispositif représenté schématiquement à la figure 1 permet le recalage de deux trains de données binaires de mêmes débits, sans relation de phase connue, sur les fronts montants d'un signal de référence d'horloge HO synchrone avec les deux trains de données.

Le signal de référence d'horloge HO fourni par une horloge locale est appliqué par une entrée 10 à un générateur 1 de signaux quadriphasés d'horloge qui délivre outre le signal de référence d'horloge HO, trois autres versions H1, H2, H3 du signal d'horloge retardées d'un, deux et trois quarts de période par rapport au signal de référence d'horloge H0.

Les deux trains de données binaires à recaler De et De′ sont appliqués par deux entrées distinctes 20 et 20′ à des circuits individuels de remise en phase 2 et 2′, de structures identiques, qui recoivent en outre les quatre signaux d'horloge H0, H1, H2 et H3 délivrés par le générateur 1 de signaux quadriphasés d'horloge et qui délivrent, sur deux sorties distinctes 21 et 21′, les trains de données binaires Ds et Ds′ recalés par rapport au front montant du signal de référence d'horloge H0.

Chaque circuit de remise en phase 2, 2′ comporte d'une part, un circuit de double échantillonnage 23, 23′ qui, en combinaison avec un circuit de sélection 24, 24′ des signaux quadriphasés d'horloge adressé par un circuit de balayage séque ntiel 25, 25′ commandé par un comparateur 26, 26′, permet de sélectionner le signal d'horloge Hi, Hj, le mieux calé par rapport au train de données binaires entrant De, De′, et d'extraire, grâce à ce dernier, les valeurs exactes des données contenues dans le train entrant De. De′, et d'autre part, un circuit de régénération 27, 27′ reconstituant, à partir des valeurs exactes des données délivrées par le circuit de double échantillonnage 23, 23′, une version Ds, Ds′ du train de données binaires entrant De, De′ recalée sur les fronts montants du signal de référence d'horloge H0 et délivrée en sortie 21, 21′ du dispositif de recalage.

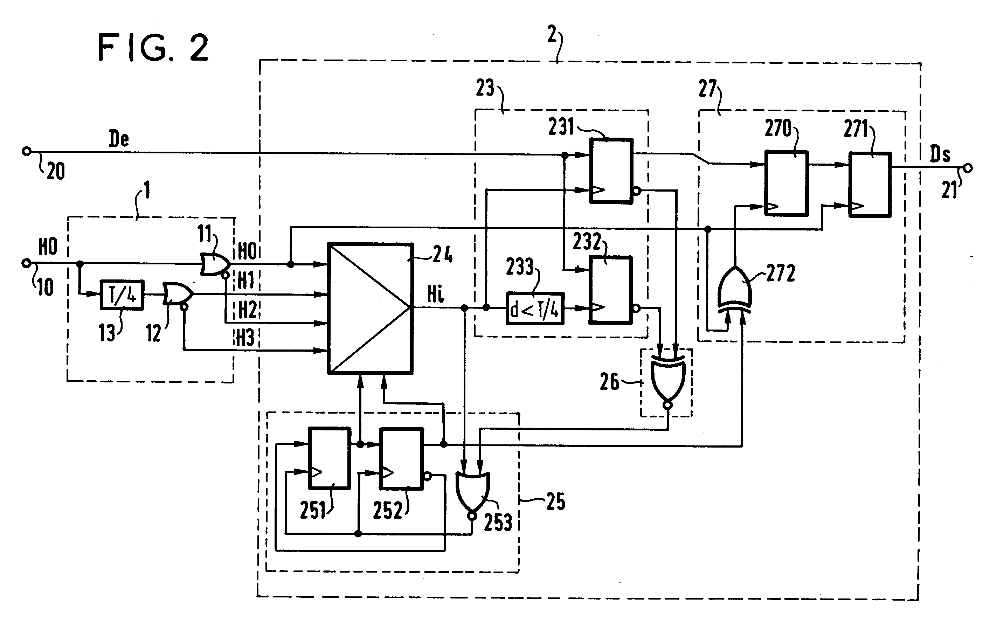

La figure 2 détaille le schéma du générateur 1 de signaux quadriphasés d'horloge et de l'un 2 des circuits de remise en phase.

Le générateur 1 de signaux quadriphasés d'horloge se compose de deux portes à une entrée 11 et 12 à sorties inverseuses et non inverseuses connectés en entrée à l'entrée 10 du dispositif de recalage, l'une 11 directement, l'autre 12 par l'intermédiaire d'un circuit à retard 13 introduisant un retard égal à un quart de période du signal d'horloge. La porte 11 directement connectée à l'entrée 10 sur laquelle est appliqué le signal de référence d'horloge H0 restitue ce signal sur sa sortie non inverseuse et un signal complémenté sur sa sortie inverseuse qui constitue un signal d'horloge H2 en retard d'une demi-période sur le signal de référence d'horloge H0. La porte 12 connectée à l'entrée 10 par l'intermédiaire du circuit à retard 13 introduisant un retard d'un quart de période du signal d'horloge délivre, sur sa sortie non inverseuse, un signal d'horloge H1 en retard d'un quart de période sur le signal de référence d'horloge H0 et, sur sa sortie inverseuse, un signal d'horloge H3 en retard de trois quarts de période sur le signal de référence d'horloge H0.

On remarque ici que la propriété de symétrie que posséde le signal d'horloge permet, à la différence des trains de données binaires, d'obtenir des versions déphasées du signal d'horloge par une simple opération d'inversion. Ainsi on peut obtenir un nombre pair n de signaux d'horloge également déphasés entre eux sur la durée d'une période $T = \frac{1}{F_0}$ d'horloge avec seulement $\frac{n}{2} - 1$ circuits à retard pour l'ensemble des voies alors que si les trains de données binaires étaient déphasés à la place du signal d'horloge il faudrait (n - 1) circuits à retard par train de données. La contre- partie de cette méthode est que le recalage obtenu se fait par rapport à un signal d'horloge Hi qui n'est pas nécessairement le signal de référence d'horloge H0.

Les quatre signaux d'horloge H0, H1, H2, H3 sont appliqués dans le circuit de remise en phase 2 aux entrées du circuit de sélection 24 qui délivre l'un d'entre eux Hi sur sa sortie et dont l'adressage est sous le contrôle du circuit de balayage séquentiel 25. Ce dernier, tant qu'il n'est pas bloqué, fait succèder cycliquement et dans l'ordre, les quatre signaux d'horloge H0, H1, H2, H3 en sortie du circuit de sélection 24. Il est constitué d'un compteur à deux étages formé de deux bascules 251, 252 de type D, à

3

déclenchement sur fronts montants, bouclées sur elles-mêmes et cadencées par la version complémentée du signal d'horloge Hi issue d'une porte logique 253 de type "non ou" à deux entrées l'une connectée en sortie du circuit de sélection 24, l'autre servant de commande de blocage et étant active au niveau logique 1 pendant les demi-périodes où le signal d'horloge Hi est au niveau logique 0.

Le train de données binaires entrant De est appliqué dans le circuit de remise en phase 2 au circuit de double échantillonnage 23 formé de deux bascules 231, 232 de type D, à déclenchement sur fronts montants, qui recoivent le train de données binaires entrant De sur leur entrée de données D et qui sont cadencées par le signal d'horloge Hi délivré par le circuit de sélection 24, l'une 231 directement et l'autre 232 par l'intermédiaire d'un circuit à retard 233 app ortant au signal d'horloge Hi un retard d supérieur à la somme des temps de maintien et de prépositionnement des bascules 231, 232 et inférieur au quart de la période T du signal d'horloge.

Les sorties complémentées des deux bascules 231 et 232 du circuit de double échantillonnage 23 sont appliquées aux entrées du comparateur 26 constitué d'une porte logique de type "non ou exclusif" qui contrôle l'entrée de blocage du circuit de balayage séquentiel 25.

L'état de sortie de la porte logique de type "non ou exclusif" du comparateur 26 n'a aucun effet sur le circuit de balayage séquentiel 25 pendant la prise des deux échantillons par le circuit de double échantillonnage 23 car cette prise des deux échantillons s'effectue pendant les demi-périodes où le signal d'horloge Hi est au niveau logique 1 et impose un niveau logique 0 en sortie de la porte logique 253 du circuit de balayage séquentiel 25. Après la prise des deux échantillons, pendant la fin de la demi-période où le signal d'horloge Hi est au niveau logique 1 et la demi-période suivante où le signal d'horloge Hi passe au niveau logique 0, la sortie de la porte logique de type "non ou exclusif" du comparateur 26 passe, soit au niveau logique 0 si les deux échantillons diffèrent, laissant le front descendant du signal d'horloge Hi traverser la porte logique 253 et faire progresser le circuit de balayage séquentiel 25 qui change le signal d'horloge sélectionné Hi, soit au niveau logique 1 si les deux échantillons sont identiques, bloquant la porte logique 253 du circuit de balayage séquentiel 25 et maintenant la version précédemment sélectionnée du signal d'horloge Hi.

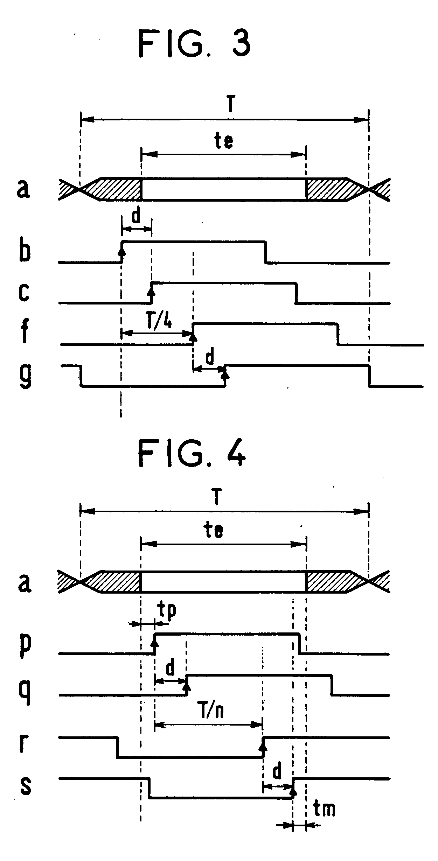

Le fait que l'échantillonnage du train de données binaires entrant De par le signal d'horloge Hi et sa version retardée de d donnent les mêmes résultats montre que ses fronts montants définissent des instants d'échantillonnage situés en dehors des plages de gigue permettant par conséquent de détecter les valeurs exactes des données contenues dans le train gigué de données binaires entrant De. Les diagrammes de la figure 3 illustrent cette propriété ainsi que le processus d'ajustement des instants du double échantillonnage.

En a est représenté un intervalle de temps unitaire T du train de données binaires entrant De bordé de part et d'autre par une plage de gigue réduisant la durée utile ou largeur de l'ouverture du diagramme de l'oeil à une fraction te de l'intervalle de temps unitaire T. En b est représenté un signal d'horloge Hi dont le front montant est mal calé et se situe dans la plage de gigue commençant l'intervalle de temps unitaire, et en c la version de ce signal d'horloge Hi affecté d'un délai d.

Au gré de la gigue, il apparaît rapidement une différence entre les valeurs d'un double échantillonnage faisant progresser le circuit de balayage séquentiel 25 et changer la version du signal d'horloge H0, H1, H2, ou H3 adoptée pour le signal d'horloge Hi par celle H1, H2, H3 ou H0 qui présente un retard supplémentaire de T/4 et qui est représentée en f avec sa version affectée du délai d représentée en g. Le front montant de ce nouveau signal d'horloge Hi et celui de sa version affectée du délai d tombent dans la partie valide des données conduisant à des doubles échantillonnages de mêmes valeurs bloquant le circuit de balayage séquentiel 25 et maintenant la version du signal d'horloge H0, H1, H2 ou H3 adoptée pour le signal d'horloge Hi.

Pour que les fronts montants du nouveau signal d'horloge Hi et de sa version affectée d'un délai d représentés en f et g tombent effectivement dans la partie valide des données, il apparaît une condition sur la gigue maximale crête à crête du train de données entrant De qui se déduit du cas limite illustré dans les diagrammes de la figure 4 pour un dispositif de recalage ayant un générateur de signaux polyphasés d'horloge délivrant n signaux d'horloge retardés entre eux de T/n.

On distingue sur les diagrammes de la figure 4 :

- en a un intervalle de temps unita ire T du train de données binaires entrant De bordé de part et d'autre par une plage de gigue limitant la durée utile te d'une donnée à une fraction de l'intervalle de temps unitaire T,

- en p le signal d'horloge dont les fronts montants apparaissent le plus près possible du début de la durée utile d'une donnée tout en conservant un double échantillonnage correct conduisant à des valeurs identiques, lesdits fronts montants étant séparés du début de la durée utile d'une donnée d'un délai tp correspondant au temps de prépositionnement de la bascule 231,

- en q la version retardée d'un délai d du signal d'horloge représenté en p,
- en r un signal d'horloge retardé de T/n par rapport à celui représenté en p et supposé avoir ses fronts montants apparaissant le plus près possible de la fin de la durée utile d'une donnée tout en provoquant un double échantillonnage correct conduisant à des valeurs identiques,
- en s la version retardée d'un délai d du signal d'horloge représenté en r dont les fronts montants apparaissent encore dans la durée utile d'une donnée, un délai tm avant la fin de celle-ci correspondant au temps de maintien de la bascule 232.

Pour qu'il y ait de manière sûre un des signaux d'horloge délivrés par le générateur de signaux polyphasés d'horloge ayant son front montant placé correctement dans la durée utile te d'une donnée, il faut que celle-ci vérifie l'inégalité :

$$te \geq tp + T/n + d + tm$$

d'où une gigue crête à crête Gcc admissible pour le train de données binaires entrant De :

$$Gcc = T - te$$
$$Gcc = \frac{n-1}{n} T - (d+tp+tm)$$

En revenant à l'exemple précédemment développé d'un dispositif à recalage pourvu d'un générateur de signaux quadriphasés d'horloge réalisé avec une technologie à réseaux prédiffusés ECL 100 K rapide conduisant à des temps de prépositionnement tp de 0,31 ns et de maintien tm de 0,2 ns, on obtient, dans le cadre d'une utilisation avec des trains de données à 140 Mbit/s et d'un temps de retard de double échantillonnage de 0,55 ns, une valeur de gigue maximale crête à crête admissible de

$$Gcc = \frac{3}{4} \frac{10^{-6}}{140} - (0,55 + 0,31 + 0,2)10^{-9} = 4,3 \ ns$$

ce qui correspond à une ouverture minimale du diagramme de l'oeil de 40%.

Lorsque le signal d'horloge sélectionné Hi présente des fronts montants correctement positionnés dans la durée utile des données du train entrant De, on obtient, en sortie des bascules 231, 232 du circuit de double échantillonnage 23, une nouvelle version du train de données binaires entrant, pratiquement sans gigue, en phase, au temps près de la propagation à travers la bascule 231, avec le signal d'horloge sélectionné Hi, c'est-à-dire avec l'un des signaux d'horloge H0, H1, H2, H3 du générateur de signaux quadriphasés d'horloge 1, identifiable par la valeur de l'adressage du circuit de sélection 24.

Cette nouvelle version du train de données binaires entrant, pratiquement exempte de gigue, disponible en sortie de la bascule 231 du circuit de double échantillonnage 23 doit être remise en phase avec le signal de référence d'horloge H0 par le circuit de régénération 27. Celui-ci procède en deux étapes pour ménager le plus de temps possible à la propagation du signal au travers de la bascule 231 et accroître le plus possible la capacité de vitesse de fonctionnement du dispositif de recalage. Il comporte essentiellement deux bascules de type D 270, 271 placées à la suite.

La première bascule de type D 270 effectue une première remise en phase de la nouvelle version du train de données binaires délivrée par la bascule 231, soit sur le signal de référence d'horloge H0 si le signal sélectionné d'horloge Hi est le signal de référence d'horloge H0 ou le signal d'horloge H1, soit sur le signal d'horloge H2 si le signal sélectionné d'horloge Hi est le signal d'horloge H2 ou le signal d'horloge H3. Pour ce faire, elle reçoit sur son entrée D le signal de la sortie non complémentée de la bascule 231 du circuit de double échantillonnage et sur son entrée d'horloge le signal de référence d'horloge H0 ou sa version complémentée H2 qui lui sont délivrés par l'intermédiaire d'une porte logique 272 de type "ou exclusif" à deux entrées connectées l'une à la sortie du générateur de signaux quadriphasés d'horloge 1 délivrant le signal de référence d'horloge H0, et l'autre à la sortie non complémentée de la deuxième bascule 252 du circuit de balayage séquentiel 25 qui, lorsqu'elle est au niveau logique 0, limite le choix du circuit de sélection 24 aux signaux d'horloge H0, H1 et, lorsqu'elle est au niveau logique 1, limite le choix du circuit de sélection 24 aux signaux d'horloge H2, H3.

5

En présence d'un signal sélectionné d'horloge Hi correspondant au signal de référence d'horloge H0 ou au signal d'horloge H2, la première bascule 270 du circuit de régénération 27 fonctionne en synchronisme avec la bascule 231 du circuit de double échantillonnage qui a donc la durée d'une période de signal d'horloge pour changer d'état. En présence d'un signal sélectionné Hi correspondant au signal d'horloge H1 ou au signal d'horloge H3, la première bascule 270 du circuit de régénération 27 fonctionne avec une avance d'un quart de période de signal d'horloge sur la bascule 231 du circuit de double échantillonnage 23 qui a donc trois quarts de période de signal d'horloge pour changer d'état.

La deuxième bascule de type D 271 effectue une remise en phase finale sur le signal de référence d'horloge H0, de la version du train de données binaires délivrée par la première bascule de type D 270 en phase, soit avec le signal de référence d'horloge H0, soit avec le signal de référence d'horloge H2. Pour ce faire, elle reçoit sur son entrée D le signal de la sortie non complémentée de la première bascule de type D 270 et sur son entrée d'horloge le signal de référence d'horloge H0 disponible à l'une des sorties du générateur de signaux quadriphasés d'horloge 1.

La deuxième bascule de type D 271 fonctionne, soit en synchronisme avec la première bascule de type D, soit avec une avance d'une demi-période de signal d'horloge ce qui laisse, dans tous les cas, à la première bascule 270 au moins une demi-période du signal d'horloge pour changer d'état.

On pourrait supprimer la première bascule de type D 270 mais la bascule 231 du circuit de double échantillonnage n'aurait plus, dans certains cas, qu'un quart de période de signal d'horloge pour changer d'état ce qui peut se révéler juste en cas de débit binaire élevé, un quart de période de signal d'horloge d'un train binaire à 140 Mbit/s durant de l'ordre de 1,8 ns.

On peut, sans sortir du cadre de l'invention modifier certaines dispositions ou remplacer certains moyens par des moyens équivalents.

**Revendications**

1. Dispositif de recalage d'un ou plusieurs trains de données binaires De, De' de débits identiques Do ou sous multiples Do/k (k entier), sur un signal de référence d'horloge synchrone HO, comportant un générateur de signaux polyphasés d'horloge (1) engendrant des signaux d'horloge synchrone également retardés entre eux et des circuits de remise en phase (2, 2'), un par train de données binaires entrant De, De', comportant chacun :
   - un circuit de sélection (24, 24') de l'un Hi des signaux d'horloge délivrés par le générateur de signaux polyphasés d'horloge (1),
   - un circuit de balayage séquentiel (25, 25') de l'adressage du circuit de sélection (24, 24') provoquant lorsqu'il progresse l'échange du signal d'horloge sélectionné dans ceux délivrés par le générateur de signaux polyphasés d'horloge (1) par un autre déphasé d'une certaine valeur,
   - un circuit de double échantillonnage (23, 23') opérant deux échantillonnages successifs du train de données concernés à recaler, sur un certain délai d dont l'un à la cadence du signal d'horloge Hi délivré par le circuit de sélection (24, 24'),
   - un comparateur (26, 26') des valeurs de chaque double échantillonnage faisant progresser le circuit de balayage séquentiel (25, 25') en cas de discordance de valeurs,
   - un circuit de régénération (27, 27') opérant le recalage du train de données concerné, par rééchantillonnage, en synchronisme avec le signal de référence d'horloge HO, de l'un des échantillons fourni par le circuit de double échantillonnage (23, 23') ;
   caractérise en ce que le circuit de régénération (27, 27') comporte : une première bascule (270) qui rééchantillonne l'un des échantillons du train de données à recaler fourni par le circuit de double échantillonnage (23, 23'), ce rééchantillonnage s'effectuant en synchronisme, soit avec le signal de référence d'horloge HO, soit avec la version complémentée du signal de référence d'horloge HO, le choix se portant sur celui ayant la moindre avance par rapport au signal d'horloge Hi délivré par le circuit de sélection (24, 24'), et une deuxième bascule (271) qui échantillonne le signal de sortie de la première bascule (270) en synchronisme avec le signal de référence d'horloge HO.

2. Dispositif selon la revendication 1, caractérisé en ce que le circuit de double échantillonnage (23, 23') comporte un circuit à retard (233) retardant d'un délai d le signal d'horloge Hi délivré par le circuit de sélection (24, 24') et deux bascules (231, 232) qui échantillonnent le train de données entrant à recaler, l'une en synchronisme avec le signal d'horloge Hi délivré par le circuit de sélection (24, 24') l'autre en synchronisme avec la version retardée de ce dernier signal d'horloge Hi délivrée par ledit circuit à retard (233).

**3.** Dispositif de recalage selon la revendication 1, caractérisé en ce que le générateur de signaux polyphasés d'horloge (1) engendre un nombre n pair de signaux d'horloge déphasés entre eux de T/n, dont le signal de référence d'horloge HO, à l'aide de n/2 - 1 circuits à retard (13) et n/2 circuits de complémentation.

## Claims

**1.** A device for relocking one or a number of binary data trains (De, De') having identical bit rates Do or submultiples thereof Do/k (k being an even number), on a synchronous reference clock signal HO, comprising a polyphase clock signal generator (1) for producing synchronous clock signals which are also delayed with respect to each other and rephasing circuits (2, 2'), one per incoming data train De, De', each rephasing circuit comprising:
- a selection circuit (24, 24') selecting one of the clock signals Hi delivered by the polyphase clock signal generator (1),
- a sequential scanning circuit (25, 25') for scanning the addresses of the selection circuit (24, 24') which causes, when progressing, the replacement of the clock signal selected from those delivered by the polyphase clock signal generator (1) by another clock signal which is shifted in phase by a certain amount,
- a double-sampling circuit (23, 23') for performing two successive sampling operations on the train of data to be relocked over a certain time delay d, one of these operations being performed in synchronism with the clock signal Hi delivered by the selection circuit (24, 24'),
- a comparator (26, 26') for comparing the values at each double sampling operation which produces a progression of the sequential scanning circuit (25, 25') in the event of a discrepancy in the values, and
- a regenerating circuit (27, 27') performing the relocking of the related train of data, by way of resampling and in synchronism with the reference clock signal HO of one of the samples delivered by the double-sampling circuit (23, 23'),

characterized in that the regeneration circuit (27, 27') comprise: a first flip-flop (270) for resampling one of the samples of the data train to be relocked as delivered by the double-sampling circuit (23, 23'), said resampling operation being performed in synchronism either with the reference clock signal HO, or with the complemented version of the reference clock signal HO, the choice being directed to the signal which has the smallest lead with respect to the clock signal Hi delivered by the selection circuit (24, 24'), and a second flip-flop (271) for sampling the output signal of the first flip-flop (270) in synchronism with the reference clock signal HO.

**2.** A device according to claim 1, characterized in that the double-sampling circuit (23, 23') comprises a delay circuit (233) for delaying by a time interval d the clock signal Hi delivered by the selection circuit (24, 24'), and two flip-flops (231, 232) which sample the incoming data train to be relocked, one in synchronism with the clock signal Hi delivered by the selection circuit (24, 24') and the other in synchronism with the delayed version of said latter clock signal Hi delivered by the delay circuit (233).

**3.** A relocking device according to claim 1, characterized in that the polyphase clock signal generator (1) produces an even number n of clock signals shifted in phase by T/n with respect to each other, by means of n/2 - 1 delay circuits (13) and n/2 complementation circuits, the reference clock signals constituting one of these clock signals.

## Patentansprüche

**1.** Einrichtung zum Synchronisieren einer oder mehrerer Binärdatenfolgen De, De' mit identischer Bitrate Do oder einem Teilvielfachen Do/k davon (k ist eine ganze Zahl) auf ein synchrones Taktbezugssignal HO, wobei die Einrichtung einen Mehrphasentaktsignalgenerator (1), der synchrone Taktsignale erzeugt, die ebenfalls untereinander verzögert sind, sowie Kreise zur Phaseneinstellung (2, 2') aufweist, und zwar einen Kreis je ankommender Binärdatenfolge De, De',

wobei jeder Kreis zur Phaseneinstellung folgende Komponenten aufweist:
- einen Kreis zum Auswählen eines der vom Mehrphasentaktsignalgenerator (1) gelieferten Taktsignale Hi,

- einen Kreis zum sequentiellen Überstreichen (25, 25') der Adressierung des Auswahlkreises (24, 24'), der fortschreitend den Austausch des Taktsignals, das unter den vom Mehrphasentaktsignalgenerator (1) gelieferten Signalen ausgewählt wurde, gegen ein um einen bestimmten Wert phasenverschobenes anderes Taktsignal verursacht,
- einen Zweifachabtastkreis (23, 23'), der zwei aufeinanderfolgende Abtastungen der Folge der betroffenen und über eine bestimmte Verzögerungsdauer d zu synchronisierenden Daten durchführt, wobei eine der Abtastungen den Wiederholungstakt des vom Auswahlkreis gelieferten Taktsignals Hi besitzt,
- einen Komparator (26, 26') zum Vergleichen der Werte jeder Zweifachabtastung, der den Kreis zum sequentiellen Überstreichen (25, 25') im Fall nicht übereinstimmender Werte weiterschaltet, und
- einen Regenerierkreis (27, 27'), der die Synchronisierung der betroffenen Datenfolge durch Neuabtastung einer der vom Zweifachabtastkreis (23, 23') gelieferten Tastproben synchron mit dem Taktbezugssignal HO durchführt,

dadurch gekennzeichnet, daß der Regenerierkreis (27, 27') aufweist: ein erstes Flip-Flop (270), das eine der Abtastproben der vom Zweifachabtastkreis (23, 23') gelieferten und zu synchronisierenden Datenfolgen neu abtastet, wobei diese Neuabtastung synchron entweder mit dem Bezugstaktsignal HO oder mit der Komplementärversion des Bezugstaktsignals HO erfolgt und die Wahl auf dasjenige Signal fällt, das den geringeren Vorlauf in Bezug auf das vom Auswahlkreis (24, 24') gelieferte Taktsignal Hi aufweist; und ein zweites Flip-Flop, das das Ausgangssignal des ersten Flip-Flops (270) synchron mit dem Bezugstaktsignal HO abtastet.

2. Einrichtung nach Anspruch 1, dadurch gekennzeichnet, daß der Zweifachabtastkreis (23, 23') einen Verzögerungskreis (233), der das vom Auswahlkreis (24, 24') gelieferte Taktsignal Hi um eine Zeitdauer d verzögert, und zwei Flip-Flops (231, 232) aufweist, die die zu synchronisierende Datenfolge abtasten, und zwar das eine synchron mit dem vom Auswahlkreis (24, 24') gelieferten Taktsignal Hi, und das andere synchron mit der verzögerten Version des Taktsignals Hi, die vom Verzögerungskreis (233) geliefert wird.

3. Synchronisiereinrichtung nach Anspruch 1, dadurch gekennzeichnet, daß der Mehrphasentaktsignalgenerator (1) mit Hilfe von n/2-1 Verzögerungskreisen (13) und n/2 Komplementierkreisen eine geradzahliger Anzahl n von untereinander um T/n phasenverschobene Taktsignale erzeugt, zu denen das Bezugstaktsignal HO gehört.

FIG. 1

EP 0 260 632 B1

# FIG. 2

EP 0 260 632 B1

# FIG. 3

# FIG. 4